# EUROPEAN PATENT SPECIFICATION

(11) **EP 3 127 225 B1**
(45) Date of publication and mention of the grant of the patent: **22.08.2018**
(21) Application number: 15715219.0
(22) Date of filing: 02.04.2015
(51) Int. Cl.: H02K 21/24, H02K 1/02, H02K 9/06, H02K 21/12, H02K 1/14, H02K 1/20, H02K 3/24, H02K 1/27, H02K 3/18

(54) **STATOR MODULE OF AN ELECTRIC MACHINE COMPRISING AN PERMANENT MAGNET ROTOR**
STATORMODUL EINER ELEKTRISCHEN MASCHINE MIT EINEM PERMANENTMAGNETROTOR
MODULE DE STATOR D'UNE MACHINE ÉLECTRIQUE DE TYPE À ROTOR À AIMANTS PERMANENTS

(30) Priority: 02.04.2014 EP 14163167
(43) Date of publication of application: 08.02.2017
(73) Proprietor: J.H. Beheer B.V., 6361 KE Nuth (NL)
(72) Inventor: WEERTS, F.M.J., 6361 KE Nuth (NL); BRANDTS, Wim, 6361 KE Nuth (NL)
(74) Representative: van der Krans, Arie
(86) International application number: PCT/EP2015/057380
(87) International publication number: WO 2015/150545

(56) References cited:
- WO-A2-2010/092403
- DE-A1-102011 109 129
- US-A- 4 820 338
- US-A1- 2009 206 693

## Description

### Field of the invention

The invention relates to an ferromagnetic core for a stator coil arrangement of a permanent magnet rotary electric machine, a stator coil arrangement of a permanent magnet rotary electric machine comprising the ferromagnetic core, a stator of a permanent magnet rotary electric machine comprising the stator coil arrangement and a permanent magnet rotary electric machine comprising the stator. The permanent magnet rotary electric machine can be applied as a generator or an electric motor depending on the use.

### Background of the invention

In general, principles of a permanent magnet rotary electric machine, in particular an axial flux generator are known from FR123766. The generator that is disclosed in this publication has many drawbacks, amongst others the mounting of the magnets, cooling, which is often insufficient and requires liquid cooling, advanced precision construction is required, assembly is complex, and the weight due to the required iron core is high.

More recently, WO2010007385 describes a permanent magnet rotary electric machine, in particular an axial flux rotating machine. This machine, according to the abstract, comprises a stator sandwiched between two rotors. The machine comprises a retention means for retaining permanent magnets on the rotor, the retention means comprising a back plate with a plurality of protrusions which define a plurality of pockets for accommodating the magnets. The retention means is arranged such that the magnets can be inserted into the pockets and held therein, and the retention means with inserted permanent magnets can be fixed to a rotor so as to retain the magnets axially and tangentially. A cooling jacket for the stator and techniques for securing the stator to the machine are also disclosed.

WO2010092403 describes a permanent magnet rotary electric machine, in particular an axial flux rotating machine, having a stator with stator coil arrangements comprising windings wound around magnetic permeable stator bars used as cores for the stator coil arrangements made from a soft magnetic composite (SMC) material. The stator bars may be provided with a low reluctance lamination roll to reduce the total magnetic reluctance of the bar. The stator bars in operation heat up due to magnetic remanence or hysteresis of the SMC material. Moreover the stator coil arrangements heat up due to the currents passing through the stator coil arrangements. Heat generation is a
limiting factor in the design of permanent magnet rotary electric machines. When a stator core exceeds a Curie temperature, the
core material can no longer be magnetized. Therefore the stator coil arrangements require cooling. Cooling capacity is thus a limiting factor in electric machine performance.

### Summary of the invention

It is an object of the invention to provide a permanent magnet rotary electric machine having improved performance.

The object is achieved in a stator coil arrangement for a permanent magnet electric rotary machine, wherein said stator coil arrangement comprises a ferromagnetic core, at least one winding of a conductor wound around said ferromagnetic core, wherein said ferromagnetic core comprises a compound comprising a polymer matrix composition and a functional filler, the functional filler comprising a ferromagnetic material. The ferromagnetic material provides a relatively high relative magnetic permeability, sufficient for the ferromagnetic core to be applied in a stator core of a permanent magnet rotary electric machine.

Said ferromagnetic core comprises at least one fluid channel extending through said core. The fluid channel allows a fluid to pass through the fluid channel thereby allowing excess heat to be removed from the core, i.e. cooling of the core. The fluid is preferably a gas. An inert gas may be used. Preferably the fluid is air and the fluid channels are air channels.

Said at least one winding is centred along a magnetic axis through said core, said magnetic axis being substantially parallel to the at least one fluid channel in said core.

The polymer matrix composition has a minimum thermal conductivity in a range of 0.1 W/mK.

The stator coil arrangement according to the invention can be applied in a stator of an permanent magnet rotary electric machine. Placed in a fluid flow within the rotary electric machine, excess heat can be removed or ventilated out of the core, thereby achieving improved cooling. With the improved cooling a higher load level for the machine can be achieved as a generator or as an electric drive. Moreover the use of the compound having polymer matrix and functional filler allows light weight ferromagnetic core to be manufactured and thereby a high performance relatively light weight rotary electrical machine to be manufactured.

In an embodiment, the filler has a weight ratio with respect to said polymer matrix composition in a range of 0.5 to 5. This means that the filler content in weight % is in a range of 25 weight % to 83.3 weight % of the total weight of the compound.

This allows sufficient magnetic permeability of the ferromagnetic core to be used in a stator of a permanent magnet rotary electric machine with limited losses in the ferromagnetic particles.

In an embodiment, said functional filler is non-uniformly divided. In a preferred embodiment, a filler concentration at at least one axial end of the core is lower than a concentration at the centre of said core.

In an embodiment, the concentration of functional filler at the outer 10 % of a length in axial direction is lower than the concentration at 10 % of a length around the
centre in axial direction. An advantage of a lower density at an axial end is a decrease of the holding torque of the generator, which leads to a smoother rotation of the rotor relative to the stator, i.e. reduces cogging.

In an embodiment, the thermal conductivity is at least 0.2 W/mK. This allows windings of a conductor around the core to be properly insulated, enabling high voltages induced in the windings. A high voltage is advantageous especially at low revolution speeds when the permanent magnet rotary electric machine is used as a generator, since a high voltage can relatively easy be converted into a lower name plate or nominal voltage, thus the voltage operating range of the generator is improved.

In a further embodiment, with polymer material selected from a group of polymer material compositions comprising polyurethanes and epoxies, the ferromagnetic core containing this polymer matrix composition has a breakdown voltage (according to ASTM D149 standard) of at least 5 kV/mm. In an embodiment, the minimum breakdown voltage is 10kV/mm. This allows coil windings of a stator coil arrangement wherein the core is placed to directly contact the core. No separate holder is required for the core windings, the core acts as a body for accommodating the windings. Thereby the high insulation of the polymer composite material in combination with high thermal conductivity properties additional cooling of the windings of the stator coil arrangement is achieved, obviating the need for further external cooling of the stator coil arrangement.

In an embodiment of the ferromagnetic core, the core further comprises a ferromagnetic core element having a magnetic permeability higher than the magnetic permeability of the compound. In an embodiment, the magnetic permeability of the core element is at least twice the magnetic permeability of the core compound. This significantly improves the magnetic coupling of the ferromagnetic core when used in a stator coil arrangement to a rotor, thereby increasing efficiency of the electric machine. Magnetic coupling determines the voltage induced in the stator coil arrangement as a result of changes in the magnetic field between rotor and stator in a permanent magnet rotary electric machine when used as a generator. The combination of the compound having the polymer matrix and filler with ferromagnetic material combines benefits of the compound of thermal conductivity and electrical field resistance, i.e. high breakdown voltage, with high magnetic permeability, i.e. high magnetic coupling and subsequent efficiency.

In a preferred embodiment, the ferromagnetic core element is arranged in the at least one fluid channel, partially filling said fluid channel. This ferromagnetic core can be manufactured such that the core element can be inserted in a preformed fluid channel of the core. Moreover, heat from within the core and the core element can be
removed simultaneously. Thus in this embodiment an optimal solution is found for improved electric machine performance by improved removal of excess heat, i.e. by improved cooling.

In an embodiment, the ferromagnetic core element comprises ferromagnetic laminations. Eddy currents within the core element are counteracted this way, thereby reducing heat generation within the core element.

In a further embodiment, the laminated ferromagnetic core element has partially overlapping ferromagnetic laminations for allowing a fluid flow past said laminations. This allows the laminations to be prepared by assembling the laminations and inserting the assembly in the fluid channel. As the laminations overlap only partially, fluid flow is allowed to pass through the assembly at parts where the laminations do not overlap.

In an alternative embodiment, the laminated ferromagnetic core element has interspaced ferromagnetic laminations for allowing a fluid flow past said laminations. This allows the laminations to be inserted into the fluid channel one by one. The fluid flow is allowed to pass through the spaces between the laminations. Cooling of the core element is thus improved.

In an embodiment, the ferromagnetic core comprises a pole shoe at a head of the ferromagnetic core for facing a permanent magnet on a rotor of the electric rotary machine, the pole shoe laterally extending from the head of the ferromagnetic core, wherein the pole shoe is made from the compound of the ferromagnetic core. The pole shoe can also be manufactured from a compound with a different composition than the core. The pole shoe allows a gradual transition of magnetic flux when the core is passed by a permanent magnet, thus cogging is reduced.

The core comprises a polymer matrix. This polymer matrix may comprise a mixture of polymers, and may comprise additional fillers and compound used in polymer material.

In an embodiment, the polymer matrix comprises a polymer selected from the group consisting of ABS, polyamide like nylon, an epoxy-based polymer, and polyurethane. In an embodiment, the polymer matrix comprises at least 50% by weight of the polymer or a mixture thereof. Preferably, the polymer matrix comprises at least 80% by weight of the polymer or a mixture thereof. The shore hardness (ASTM-D-2240, Shore A, cured) can be between 50 and 100.

The object is also achieved according to another aspect of the invention, in a stator coil arrangement for an electric rotary machine, comprising a ferromagnetic core as described above and at least one winding of a conductor wound around said core, wherein said at least one winding is centred around a magnetic axis
through said core substantially parallel to the fluid channel in said core. This allows a fluid flow through the core of the
stator coil arrangement in a direction of rotor to stator in a permanent magnet rotary electric machine wherein the stator coil arrangement is employed.

The object is also achieved in accordance with another aspect according to the invention, in a stator for an electric rotary machine, comprising a stator frame around a central axis, having an opening for receiving a rotational shaft coinciding with said central axis, and a plurality of stator coil arrangements as described. The stator coil arrangements are attached to said stator frame, wherein the plurality of stator coil arrangements is spaced around said central axis. In combination with a rotor having permanent magnets, this allows a so-called brushless rotary electric machine.

In an embodiment, said stator coil arrangements are mounted on a peripheral section of said stator frame, said stator frame having for each stator coil arrangement an opening corresponding to an opening of said fluid channel of said ferromagnetic core of said stator coil arrangement. The opening corresponding to an opening of said fluid channel of said ferromagnetic core of said stator coil arrangement. allows a fluid flow through both the stator frame and ferromagnetic core for removing excess heat from the ferromagnetic core.

In an embodiment, said stator coil arrangements are attached to a circumference of the stator frame, allowing a relatively large number of stator coil arrangements to be attached to the stator frame. For low speed high torque applications a large number of stator coil arrangements is preferred.

In an embodiment, the magnetic axis of the stator coil arrangements is axially oriented, i.e. parallel to the drive shaft. When electrical power is applied to the stator coil arrangements, they will generate a magnetic field that is substantially parallel to the rotational axis near the axial ends of the stator coil arrangements.

This allows rotary electric machines to be manufactured very flat, which is advantageous in for example traction applications where the rotary electric machine is arranged in a wheel, and for example in windmills with vertical drive shafts wherein the electric rotary machine is used as a generator.

In an alternative embodiment the magnetic axis through the stator coil arrangements is radially oriented, i.e. perpendicularly oriented with respect to the rotational shaft.

In an embodiment, the stator coil arrangements are provided in said electric machine spaced at a radial circumference allowing fluid to contact said coils.

The spacing allows a fluid to flow past the outside of the stator coil arrangements for additional cooling the windings.

The object is also achieved according to another aspect of the invention, in an electric rotary machine comprising a rotational shaft, a stator as described above, comprising stator coil arrangements as described, mounted around said rotational shaft, a rotor connected to said rotational shaft, wherein the rotor is provided with permanent magnets, the permanent magnets facing the ferromagnetic cores of said stator coil arrangements of
said stator. Said rotor comprises ventilation means for in operation generating a fluid flow through said fluid channels of said ferromagnetic cores.

In general, a permanent magnet rotary electric machine can perform a rotational motion by electrically exciting the stator coil arrangements setting the rotor in rotational motion about this rotary shaft. Thus the rotary electric machine can be operated as an electrical motor. When torque is applied to the rotary shaft, the rotor will be set in motion to rotate about the rotary shaft causing a voltage to be generated in the stator coil arrangements. The rotary electric machine is then operated as a generator.

In the rotary electric machine, a varying magnetic field will be present in an air gap between the stator and the rotor. This magnetic field in the air gap is substantially parallel to the magnetic axis of the stator coil arrangements. When directed axially, the magnetic flux is also oriented in an axial direction of the rotary electric machine. Such a machine is also referred to as axial flux device or machine. The axial flux machine may for instance be used in an in-wheel motor. As such, an in wheel motor is known to a skilled person. The possibility of producing a permanent magnet rotary electric machine with considerable reduced weight makes it suitable for an in-wheel motor. For instance, it is possible to produce a 40kW electric machine that weighs 40-100 kg as compared to a radial flux machine of 450 kg. Furthermore, production tolerances may be 0.1 mm instead of the usual 0.01 mm.

The air gap is usually less than 1 cm. In an embodiment, the air gap can be less than 1 mm, preferably less than 0.5 mm. In a further embodiment, the air gap is less than 0.2 mm. In a preferred embodiment, the stator will be provided in such a way that the magnetic field extends from the stator coil arrangements at both axial ends.

In an embodiment, the rotor comprises two rotors discs, one rotor disc at each axial end of said stator. In an embodiment, the rotor is provided with magnets, for instance permanent magnets, around the rotational axis. More in general, the rotor has a magnetic means for providing a magnetic field which near the rotor is axial. The magnets are for instance permanent magnets providing for instance in circumferential direction a varying magnetic field, for instance each time providing/presenting a North pole and a South pole to the stator.

In an embodiment, the rotor discs comprise a ferromagnetic plate at the axial outer side. In an embodiment, the outer plate or outer disc is an iron disc. The magnets may be applied directly on the surface of that disc. Additional adhesive and/or mechanical attachment means such as clamps, screws, etc. may be used to secure the
magnets. It was found that the ferromagnetic disc increase the magnetic field in the cores.

In an embodiment, the rotor discs comprise a holding disc of a non-magnetic material, providing spacers between the magnets in tangent direction. The holding disc comprise cavities for receiving the magnets. The cavities may run through the holding disc, allowing the magnets to contact the outer disc. The holding disc may for instance be made from aluminium, or from a polymer material. The holding disc may be temporary fixed to the outer disc. The holding disc may for instance be snapped-fixed to the outer disc. The holding disc may also be more permanently fixed to the statorside of the outer disc, for instance by screwing, clamping or by means of an adhesive.

In an embodiment, the rotor comprises ventilation means for providing a flow of fluid into said electric machine, in particular for providing a flow of fluid in an axial direction in said electric machine, more in particular for providing said flow of fluid through said at least one fluid channel in said cores. The ventilation means can comprise fluid inlet openings and a vane for each fluid opening. When two opposite rotor disc are provided, both rotor discs may be provided with fluid inlet openings. The vanes or blades are positioned to provide an axial flow of fluid in, in particular through, said electric machine.

In an embodiment, the rotor discs comprising said permanent magnets comprise a ferromagnetic outer disc comprising an inner holding disc from a non-magnetic polymer composition or aluminium, said holding disc comprising cavities for receiving said permanent magnets.

### Brief description of the drawings

Embodiments of the invention will now be described, by way of example only, with reference to the accompanying schematic drawings in which corresponding reference symbols indicate corresponding parts, and in which:
Figure 1 depicts an exploded side view of a axial flux rotary electric machine according to an embodiment of the invention.
Figure 2 shows a cross section through the device of figure 1.
Figure 3 shows a side view of the stator and rotors of the device of figure 1.
Figure 4 shows an exploded view of a stator coil assembly according to an embodiment of the invention.
Figure 5a and figure 5b show a perspective view of the coil assembly of figure 4.
Figure 6 shows a perspective view of the stator coil arrangement of figure 4.
Figure 7a and 7b show ferromagnetic cores according to an embodiment of the invention.
Figure 8 shows a ferromagnetic core having a pole shoe according to an embodiment of the invention.
Figure 9a, shows an exploded view of a radial flux rotary electric machine according to an embodiment of the invention.
Figure 9b shows a cross section of the radial flux rotary electric machine according to fig. 9a.
Figure 9c shows an exploded view of the radial flux rotary electric machine according to fig. 9a.having rotor and stator section separated.

The drawings are not necessarily on scale.

### Description of preferred embodiments

A permanent magnet rotary electric machine can basically be designed as an axial flux device or a radial flux device, referring to the orientation of the magnetic flux between stator and rotor, i.e. stator coil arrangements and permanent magnets of the rotor. In an axial flux design, the magnetic flux between rotor and stator is axially oriented, parallel to the rotational shaft of the device, whereas in a radial flux device, the magnetic flux between rotor and stator is radially oriented with respect to the rotational shaft.

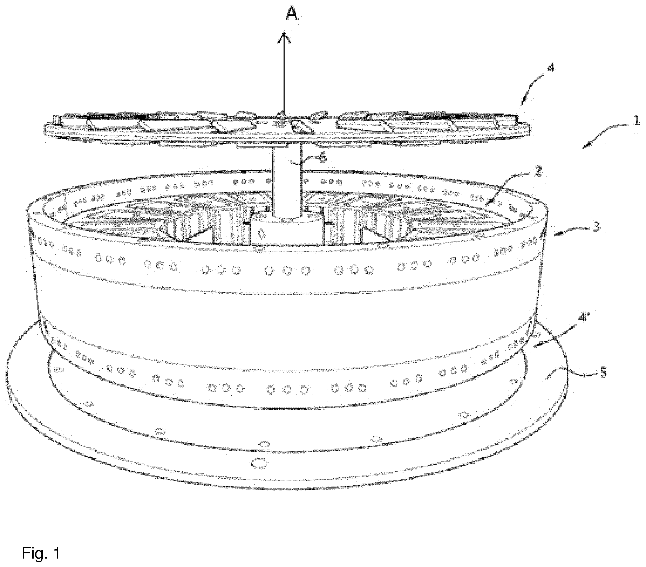

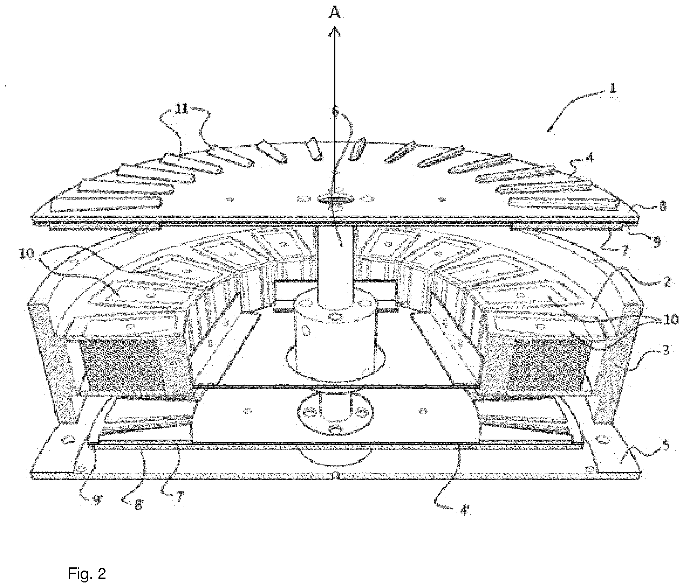

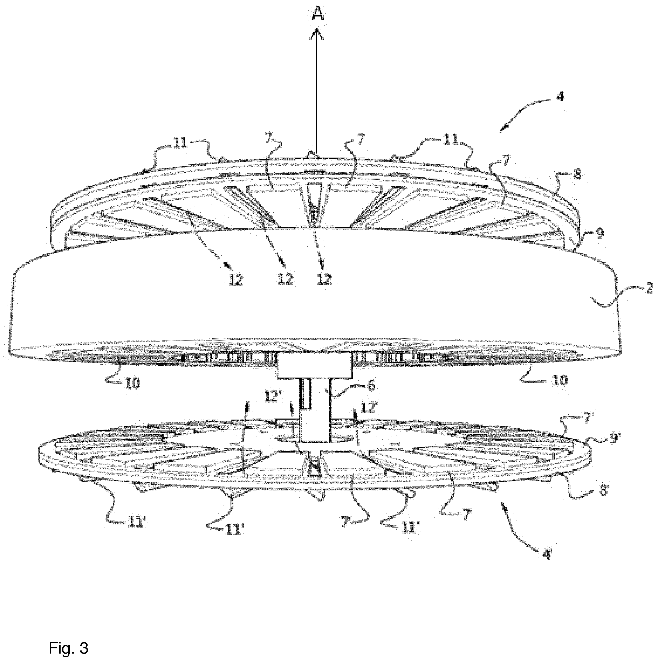

Figures 1, 2 and 3 show different views and angles of an example of an axial flux device 1. In this discussion, figures 1, 2 and 3 will therefore be discussed as one. Figure 1 shows an exploded side view of an axial flux device 1, figure 2 shows the axial flux device 1 in exploded view more from the direction of the axial direction and in cross-section. Figure 3 shows only the stator and rotor in a side view. In figures 1 and 2, parts of a housing of the axial flux device 1 are indicated.

The axial flux device 1 may be operated as be a generator, an electromotor, or even a combination of both. In such an embodiment, the device will induce a rotary motion when electrical power is applied, or it will generate electrical power when a rotary motion is applied.

The axial flux device 1 has an axial line 'A'. The 'axial direction' referred to is a direction parallel to the axial line 'A'. The axial line 'A' also is the rotational axis R of the axial flux device 1.

The axial flux device 1 has a stator 2. Stator 2 can be provided in a housing having a peripheral, axial wall 3. The housing further comprises a lower wall 5, and an upper wall that is not indicated in the drawings.

Stator 2 comprises a series of coil assemblies 10 for providing or receiving a fluctuating magnetic field B that near the axial end of the stator is in axial direction. A series of stator coil assemblies 10 are provided statically in a circle around the rotational shaft 6. Thus, axial line A also is the rotation symmetry line
of stator 2. Furthermore, the stator coil assemblies 10 are oriented with their magnetic flux axis
parallel to the axial line/rotational axis A. Thus, the axial direction is parallel to the rotational axis of the axial flux device 1.

The axial flux device 1 further comprises a rotary shaft 6 aligned with the axial line A. The rotary shaft 6 is mounted at the rotational symmetry axis of stator 2 with a bearing.

The axial flux device comprises a rotor 4, here mounted on rotary shaft 6 having the function of a rotor shaft 6. In this example, rotor 4 comprises two series of permanent magnets provided around the rotational axis, In this example, the permanent magnets are provided on two rotor discs 4', 4", one rotor disc at each axial end of stator 2. The rotor discs 4', 4" of rotor 4 comprise a respective axially outer disc 8, 8' of a ferromagnetic material, in an embodiment for instance from iron, steel or stainless steel. Permanent magnets 7, 7' are attached to the outer discs 8, 8', for one due to their exerted magnetic forces, and they may also or additionally be attached to the outer discs 8, 8' using an adhesive or other, mechanical means. The holding discs further comprise spacers between the magnets 7, 7'. In this embodiment, the outer discs 8, 8' are provided with respective spacer or holder discs 9, 9'. These spacer discs 9, 9' are provided with cavities, each for receiving a permanent magnet. In this embodiment, the spacer discs 9, 9' comprise through openings for the permanent magnets 7, 7'. The spacer discs 9, 9' are in this embodiment from a non-magnetic material. In particular, in an embodiment, the spacer disc is aluminium or polymer material.

The permanent magnets 7, 7' are mounted on the outer discs 8, 8' with their magnetic North and magnetic South poles alternatingly arranged facing the stator 2. In circumferential direction, the outer discs 8, 8' when rotated will then alternatingly present a magnetic North pole and magnetic South pole to stator coil arrangements 14. Furthermore, when the rotor 4 comprises opposite rotor discs at opposite axial ends of the stator 2, when one rotor disc has a North pole presented to a stator coil arrangement 14, the opposite rotor disc presents a South pole to that stator coil arrangement 14, and so on.

The axial flux device 1 allows fluid cooling. In particular, the axial flux device 1 can be adapted for air cooling. To that end, several measures were taken that may be applied separately, but are here indicated in combination.

The rotor 4 is provided with at least one fluid inlet (adjacent to blades 11,11') for allowing fluid to enter the axial flux device 1. More in particular, the rotor 4 comprises a series of air inlets. The air inlets are arranged to allow or provide a flow of air 12 with a substantially axial flow direction. The opposite, mirrored rotor discs 4', 4" are here provided with vanes or blades 11, 11' that are positioned and oriented for forcing air from outside the axial flux device into the housing of the axial flux device to through the stator 2. The inlets may be controllable, allowing setting of the ventilation aperture. Furthermore, the direction of the vanes may be controllable. The vanes or blades 11,11' may open in a rotation direction of the rotor 4. Here, the vanes or blades of opposite rotor discs 4, 4' open in opposite direction. In this way, a substantially axial flow may be generated.

The stator 2 of the axial flux device 1 comprises a series of stator coil assemblies 10 which are positioned to generate a magnetic field with a direction in an air gap between the rotor 4 and the stator 2, when electrical power is applied onto the stator coil arrangements, which direction of the magnetic field is substantially axially. Or, when the rotor 4 is put in motion, to receive an alternating magnetic field from the moving permanent magnets 7, 7' and to generate an alternating electrical voltage.

An axial flux device can alternatively be designed having a single rotor disc with permanent magnets where stator coil arrangements are mounted on one side of a stator frame, wherein the stator frame can be in the form of a disc for allowing magnetic flux to be guided to other stator coil arrangements on the disc.

The skilled person knows that alternative designs of an axial flux device are possible. For example the rotor of such a device may comprise a single disc having alternately magnetically oriented permanent magnets facing stator coil arrangements on one side of a stator. In such configuration the magnetic flux induced by a permanent magnets on the rotor is guided through an air gap, stator coil arrangement, stator disc, stator coil arrangement, air gap, permanent magnets adjacent to the first permanent magnet, rotor disc back to the first permanent magnet.

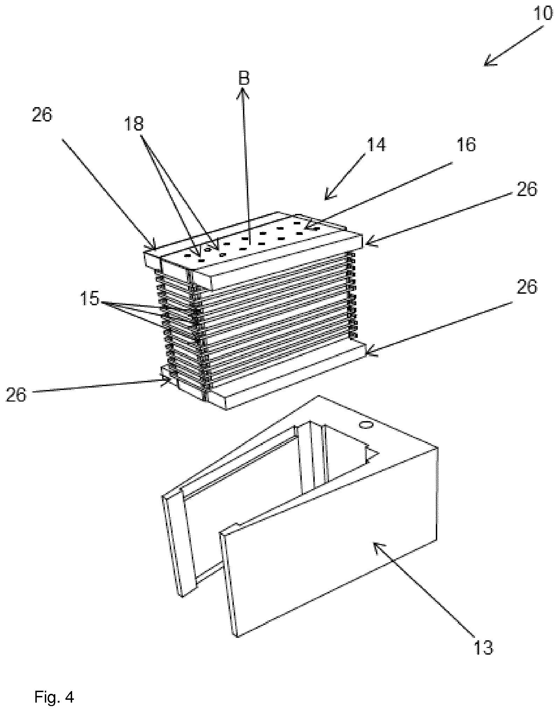

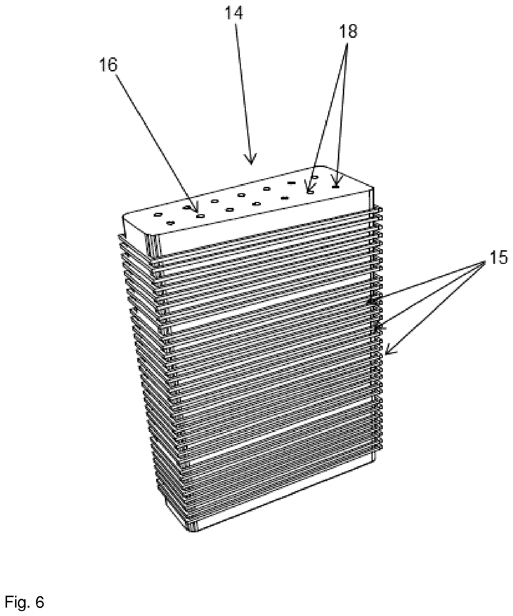

Figures 4, 5 and 6 show several details of the stator coil assemblies 10. Figure 6 shows a stator coil arrangement 14 comprising windings 15 wound around the core 16. The core 16 is usually made from a ferromagnetic material and provided for directing magnetic flux B, i.e. as many magnetic field lines as possible into the windings 15 of the actual coil. The coil assembly further comprises a pole shoe at each axial end of the coil. These plates leave fluid channels free and may comprise through holes and/or slides. The windings 15 are made from a good conductor such as copper wire.

The core 16 comprises a polymer matrix holding ferromagnetic or magnetic particles. More in particular, the polymer matrix holds ferromagnetic or magnetic powder, these compounds are referred to as a functional filler. The functional filler can comprise iron (Fe) powder or magnetite powder (Fe2O3) or a combination thereof. Other ferromagnetic materials may apply as well. The filler is preferably in the form of
particles embedded within the polymer matrix. The particle size can be between 50 and 1000 micron. Depending on the weight ratio of ferromagnetic particles, a relative magnetic permeability with respect to vacuum of at least 10 can be achieved.This functional filler compound is provided preferably in a weight ratio in a range of 0.5 to 5
with respect to the polymer matrix material. In other words, the filler may constitute a weight percentage of the total weight of the core compound in a range from 33 weight % up to 83.3 weight %.

The functional filler can be distributed in a non-uniform manner in the core 16. The density of functional filler at the axial ends of the core 16 can be lower than the density in the centre part, thereby achieving locally a lower magnetic permeability. The density at 10 % of the axial end of the core can be at least twice as low as the density in the centre part of core 16. This reduced flux density at the core ends which reduces cogging of the rotary electric machine.

The core 16 can comprise fluid channels running in axial direction through the core 16. Thus allows more efficient cooling of the core, in particular in combination with the fluid inlets in the rotor 4. In an embodiment, the fluid channels can have a diameter of about 1 to 5 mm.

The polymer matrix material of the cores 16 preferably comprise a polymer material. Examples of the polymer matrix material can be ABS, polyamide like nylon, polyurethane, epoxy-based resin. Preferred compounds are for instance polyurethane known as EP108 from Polymer Gvulot Ltd., Huntsman EP118 epoxy (also known as Araldite®), Huntsman EP232A polyurethane (also known as Arathane®, having a cured shore hardness of 80). The matrix compound or matrix material may further comprise other fillers known in polymer compounds

In an example:
Properties of EP108:

### PHYSICAL

Hardness, ASTM-D-2240, Shore A Shore A 90-95
Tensile Strength, kg./cm2, ASTM D638 90 kg./cm2
Tensile Elongation, %, ASTM D638 47-52%
Water Absorption, 168 hrs. @ 250C 0.3
Working temperature 0C -30-1000C

### ELECTRICAL

Dielectric Strength, ASTM-D-149, 18.3 kV/mm
Dielectric Constant, 60 Hz 3.5
Dissipation Factor, 60 Hz 0.03
Volume Resistivity, ohm-cm 1*10^15
Thermal conductivity, 0.52 W/mK

In particular, the polymer matrix material is selected to have a relatively high heat conductivity. The heat thermal conductivity must preferably be at least 0.1 W/mK to allow heat generated within the ferromagnetic particles in the compound to be removed. More preferably the heat thermal conductance is at least 0.2 W/mK. This allows efficient removal of heat, in particular when the windings 15 are in heat exchanging contact with the core, or in direct contact with the core 16.

Furthermore or additionally, the polymer matrix material can be an electrical isolator. The polymer matrix material can have a breakdown voltage (also referred to as dielectric strength) of at least 5 kV/mm. Preferably the minimal breakdown voltage is at least 10kV/mm. EP108 fulfils the criteria for both thermal conductivity and dielectric strength, being 0.52 W/mK and 18.3 kV/mm respectively. EP118 has a thermal conductivity of 0.8 W/mK and a dielectric strength of 15 kV/mm. EP232A has a dielectric strength of 24 kV/mm and a thermal conductivity of 0.6 W/mk. Thus with the materials EP108, EP118 and EP232A the requirements for thermal conductivity and dielectric strength have been fulfilled.

Due to the high dielectric strength of the polymer matrix composition, the windings 15 may be arranged at the surface of the core 16 directly, without a need for a winding holder. In addition the windings 15 may be fixed to the core 16 by additional polymer matrix composition between the core body 16 and the windings 15. Heat from the windings 15 can this way be absorbed by the core body 16. Thus the fluid channels 18 allow not only heat generated within the core 16 itself, but also heat generated within the windings 15 of the stator coil arrangement 14 to be advantageously removed by the fluid flow through the fluid channels 18, due to the thermal conductivity and high dielectric strength of the polymer matrix composition.

In figures 4 the stator coil arrangement 14 is shown with coil holder 13 to form a stator coil assembly 10. The core 16 can be made to fit the inner parts of core holder 13. The coil holder 13 can be made of a polymer material, for instance Nylon PA6.

In order to allow a fluid to flow around the actual coil 14 more efficiently, the coil holder 13 comprises fluid channels 17 or axially running recesses 17 that, with the coil mounted in the core holder 13, define an axial fluid channel 17 allowing fluid to flow along the windings and in heat exchanging contact with the windings 15 in order to provide optimal cooling. The stator coil arrangement 14 and the coil holder 13 can be wedge-shaped, allowing formation of a circle of coil assemblies 10 on the stator 2 of the axial flux device 1.

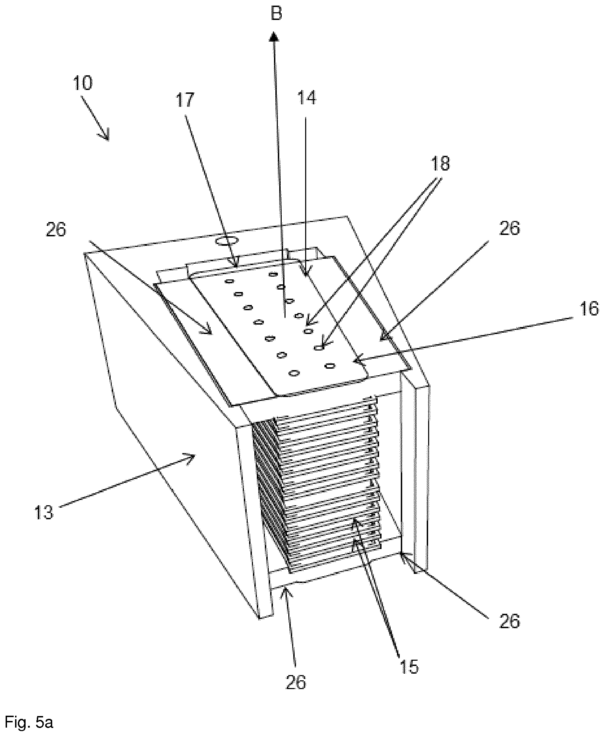

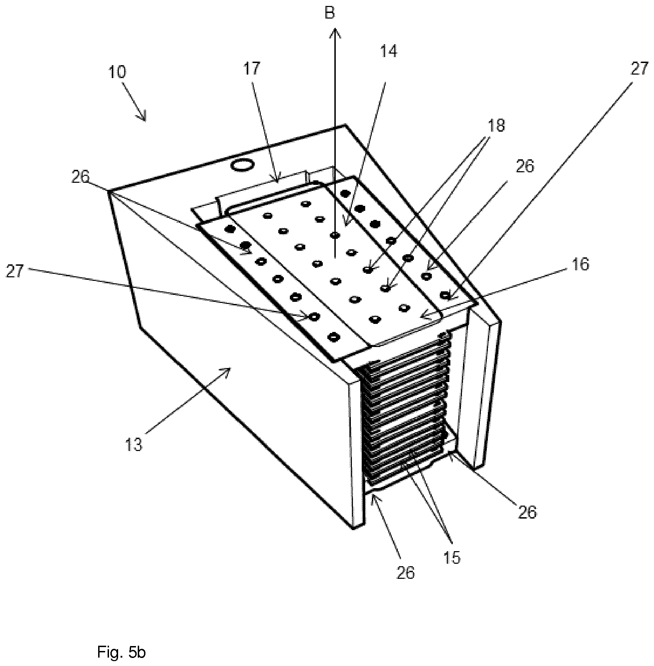

In fig. 5a, the stator coil assembly 10 is shown having the stator coil arrangement 14 inserted in the coil holder 13. The stator coil arrangement core 16 has pole shoes 26 at both ends extending laterally to both sides from the heads of the core 16. In fig. 5b is shown the same stator coil assembly 10 having pole shoes 26 of fig. 5a,
the pole shoes 26 having additional pole shoe fluid channels 27 extending through the pole shoes 26 for further cooling.
The pole shoes 26 also allow the core 16 to have a bobbin shape for sideways supporting the windings 15 around the core 16.

The pole shoes 26 can be manufactured in one piece with the cores 16 from the same compound. Alternatively the pole shoes can be attached to the pole shoe heads using an adhesive for example. Also the pole shoes 26 can be made from a different compound with respect to the core 16 having different magnetic properties.

In figures 4 - 6 fluid channels 18 through the core 16 are shown allowing a fluid flow through the core 16. The fluid flow is generated by vanes and ventilation openings 11 on the rotor discs 4, 4'.

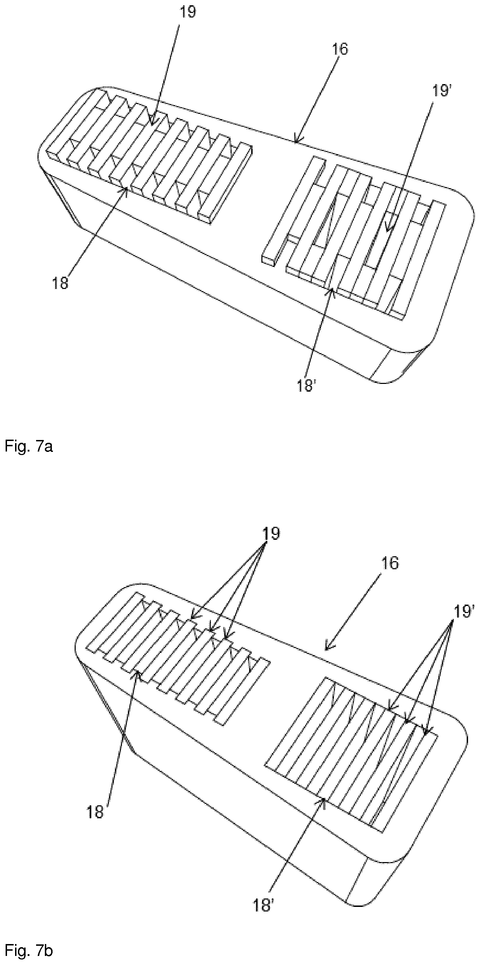

Figure 7a, 7b show examples of ferromagnetic core elements 19, 19' disposed within the fluidic channels 18, 18' of a core 16 as described above. The ferromagnetic core elements 19, 19' in the ferromagnetic cores 16 of the stator coil arrangements 14 machine comprises a stack of mutually isolated ferromagnetic laminations or plates oriented in the same direction of the flux passing through the cores 16 for avoiding eddy currents. The number of fluid channels 18 and core elements 19 in figures 7a or 7b is two by way of example. Additional fluid channels 18 with or without core elements 19 are possible. The ferromagnetic laminations can be made from iron or other ferromagnetic laminated material. Using iron laminations, a relative magnetic permeability ratio with the core compound with iron particles of at least two can be achieved. This improves the total magnetic permeability of the ferromagnetic core 16, resulting in higher voltage yield for the stator coil arrangement in the rotary electric machine used as a generator..

In figure 7a the laminations are stacked in a mutually staggered fashion, thereby allowing fluid to pass through the openings adjacent to the laminations. In figure 7b the laminations are inserted in the full width of the fluid channel 18, but mutually spaced apart such that fluid flow is allowed to pass through the mutual spacings between the laminations. The laminations may extend out of fluid channel as shown in fig. 7a depending on magnetic requirements of the stator coil arrangement wherein the core 16 is used.

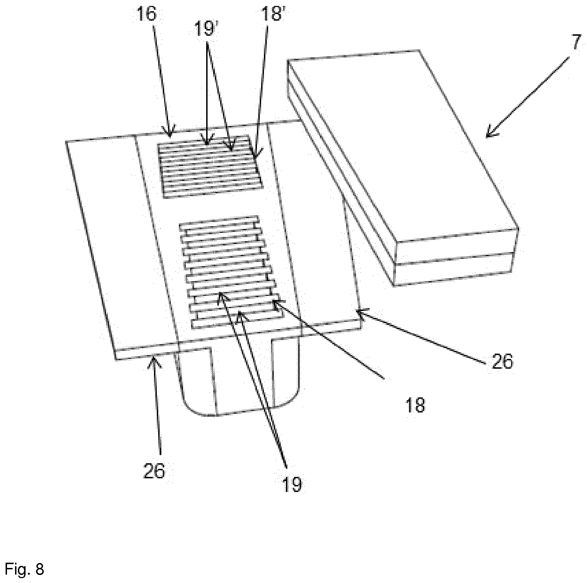

In figure 8 the core 16 of figure 7b with core elements 19, 19' in respective fluid channels 18, 18' is shown having a pole shoe 26 on both sides of the head of core 16 at one end of the core 16 as in figures 4, 5a and 5b. The pole shoes 26 are shown opposite a permanent magnet 7 of a rotor which cooperates with the pole shoes 26 allowing a smooth transition of magnetic flux within the core 16. A smooth transition of flux reduces cogging of the rotational shaft with respect of axial flux device 1. Likewise figures 4, 5a and 5b, a pole shoe can also be provided at the other end of the core 16 facing another permanent magnet of another rotor disc.

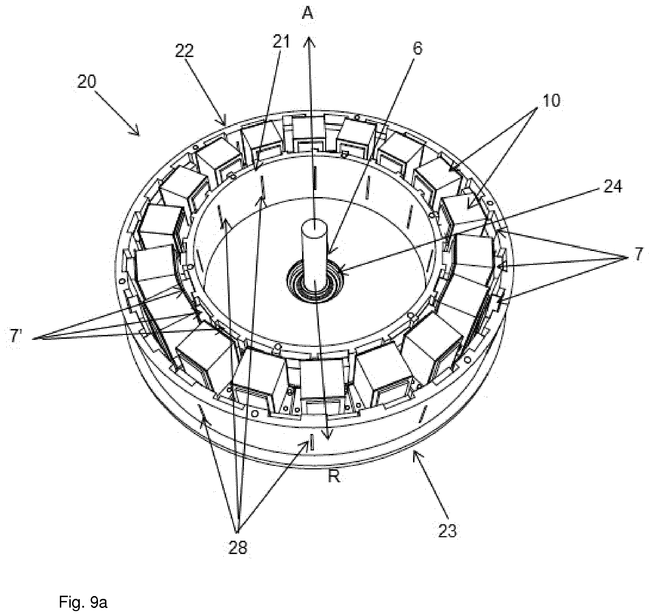

The principles and advantages as outlined above can also be achieved in a permanent magnet radial flux electric machine, i.e. a radial flux device. Figures 9a - 9c
shows an example of a radial flux device 20 having a stator 2 and a rotor 4, the rotor comprising two annular coaxially arranged rotor elements disposed radially in and outside the stator. The skilled person realizes that a permanent magnet radial flux electric machine can also have a rotor and stator, wherein the rotor having alternatingly oriented permanent magnets is radially disposed inside the stator.

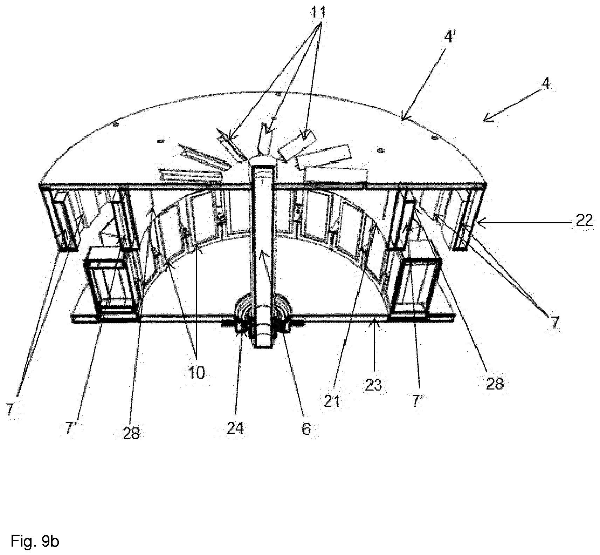

Figure 9a shows a top view of the radial flux device 20, and figure 9b a cross section respectively, having a stator with a stator disc 23 and stator coil assembly 10 mounted thereon and the two annular rotor elements 21, 22 with permanent magnets 7, 7'. The annular rotor elements 21, 22 can be mutually connected on their top side by a rotor disc 4' (not shown in fig. 9a) and attached to the rotational shaft 6, using a flange for example. The rotational shaft 6 has a bearing 24 for support in the stator disc 23. The annular rotor elements 21, 22 and stator disc 23 are separated to allow relative rotation. The permanent magnets 7, 7' of the outer rotor and inner rotor elements 21, 22 respectively provide a magnetic flux in radial direction R. The annular rotor elements 21, 22 can be provided with fluid openings 28 to facilitate a fluid flow between the rotor elements 21, 22 and stator 2 and consequently through the radially oriented fluid channels 18 of the stator coil arrangements of the stator coil assemblies 10.

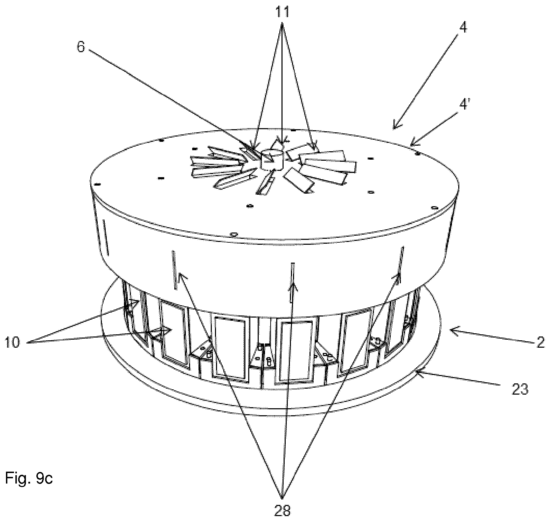

Figure 9c shows the permanent magnet radial flux electric machine of fig. 9a, wherein the annular rotor elements 21, 22 are connected with a rotor disc 4'. The rotor disc 4' has openings and fan blades 11 to cause a fluid flow, e.g. air flow within the rotor 4. The fluid flow can pass through the fluid channels of the stator coil arrangements to the fluid openings 28 in the rotor elements 21, 22.

The devices or apparatus herein can be amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The mere fact that certain measures are recited in mutually different dependent claims does not indicate that a combination of these measures cannot be used to advantage.

### REFERENCE NUMERALS

- 1: axial flux device
- 2: stator
- 3: axial wall
- 4: rotor
- 4', 4": rotor disc
- 5: housing lower wall
- 6: rotor shaft
- 7, 7': permanent magnets
- 8, 8': axial outer discs
- 9, 9': spacer discs
- 10: stator coil assembly
- 11: fan blades and openings
- 12: airflow
- 13: coil assembly holder
- 14: stator coil arrangement
- 15: windings
- 16: core
- 17: fluid channel between core and coil assembly holder
- 18: fluid channel through core
- 19, 19': ferromagnetic laminated core element
- 20: axial flux device
- 21: inner rotor
- 22: outer rotor
- 23: stator disc
- 24: bearing
- 26: pole shoe
- 27: pole shoe fluid channel
- 28: fluid opening
- A: axial direction
- R: radial direction
- B: magnetic flux axis

## Claims

1. Stator coil arrangement (14) for a permanent magnet electric rotary machine, comprising:
• a ferromagnetic core (16);
• at least one winding (15) of a conductor wound around said ferromagnetic core (16), wherein said at least one winding (15) is centred along a magnetic axis (B) through said ferromagnetic core (16);
• wherein said ferromagnetic core (16) comprises a compound comprising a polymer matrix composition and a functional filler, the functional filler comprising a ferromagnetic material,
**characterized by**
• said ferromagnetic core (16) comprising at least one fluid channel (18) extending through said core (16) for removing excess heat from the core (16); wherein
• said magnetic axis (B) of said ferromagnetic core (16) being substantially parallel to the at least one fluid channel (18) in said ferromagnetic core (16); and wherein
• said polymer matrix composition has a thermal conductivity of at least 0.1 W/mK.

2. Stator coil arrangement (14) according to claim 1, wherein said polymer matrix composition has a thermal conductivity in a range of, in particular of at least 0.2 W/mK.

3. Stator coil arrangement (14) according to any one of the preceding claims, wherein said polymer matrix composition has a dielectric strength of at least 5 kV/mm.

4. Stator coil arrangement (14) according to any one of the preceding claims, wherein said polymer matrix composition has a dielectric strength of at least 10 kV/mm.

5. Stator coil arrangement (14) according to any of the previous claims, the core (16) further comprising a stack of mutually isolated ferromagnetic laminations (19,19') having a magnetic permeability higher than the magnetic permeability of the compound.

6. Stator coil arrangement (14) according to claim 5, wherein said stack of mutually isolated ferromagnetic laminations (19,19') is arranged in the at least one fluid channel (18, 18'), partially filling said fluid channel (18, 18').

7. Stator coil arrangement (14) according to claim 5, wherein said stack of mutually isolated ferromagnetic laminations (19,19') has partially overlapping ferromagnetic laminations (19,19') for allowing a fluid flow past said laminations (19,19').

8. Stator coil arrangement (14) according to claim 6, wherein said stack of mutually isolated ferromagnetic laminations (19,19') has interspaced ferromagnetic laminations (19,19') for allowing a fluid flow past said laminations (19,19').

9. Stator coil arrangement (14) according to any of the preceding claims, further comprising a pole shoe (26) at a head of the ferromagnetic core (16) for facing a permanent magnet on a rotor of the electric rotary machine, the pole shoe (26) laterally extending from the head of the ferromagnetic core (16), wherein the pole shoe (26) is made from the compound of the ferromagnetic core (16).

10. Stator (2) for a permanent magnet electric rotary machine, comprising
- a stator frame around a central axis, having an opening for receiving a rotational shaft coinciding with said central axis (A);
- a plurality of stator coil arrangements (14) according to any of the claims 1 - 9, attached to said stator frame, said plurality of stator coil arrangements (14) spaced around said central axis (A).

11. Stator (2) according to claim 10, wherein said stator coil arrangements (14) are mounted on a peripheral section of said stator frame, said stator frame having for each stator coil arrangement (14) an opening corresponding to an opening of said fluid channel (18, 18') of said ferromagnetic core (16) of said stator coil arrangement (14).

12. Stator (2) according to claim 11, wherein said stator coil arrangements (14) are attached to a circumference of the stator frame.

13. Stator (2) according to any one of the claims 10 - 12, wherein the magnetic axis (B) through the stator coil arrangements (14) is axially oriented.

14. Stator according to any one of the claims 10 - 12, wherein the magnetic axis (B) through the stator coil arrangements (14) is radially oriented.

15. Permanent magnet electric rotary machine comprising
- a rotational shaft; and
- a stator in accordance with any one of the claims 10 - 14, mounted around said rotational shaft;
- a rotor connected to said rotational shaft,
• the rotor being provided with permanent magnets, the permanent magnets facing the ferromagnetic cores (16) of said stator coil arrangements (14) of said stator (2);
• said rotor comprising ventilation means for in operation generating a fluid flow through said fluid channels (18, 18') of said ferromagnetic cores (16).

## Patentansprüche

1. Statorspulenanordnung (14) für eine Permanentmagneten verwendende elektrische rotierende Maschine, aufweisend:
• einen ferromagnetischen Kern (16);
• wenigstens eine Wicklung (15) eines Leiters, der um den ferromagnetischen Kern (16) gewickelt ist, wobei die wenigstens eine Wicklung (15) zentrisch entlang einer magnetischen Achse (B) durch den ferromagnetischen Kern (16) angeordnet ist;
• wobei der ferromagnetische Kern (16) eine Verbindung aufweist, die eine Polymermatrixzusammensetzung und ein funktionelles Füllmaterial aufweist, wobei das funktionelle Füllmaterial ein ferromagnetisches Material beinhaltet,
**dadurch gekennzeichnet, dass**
• das ferromagnetische Kern (16) wenigstens einen Fluidkanal (18) aufweist, der sich durch den Kern (16) erstreckt, um überschüssige Wärme von dem Kern (16) abzuführen; wobei
• die magnetische Achse (B) des ferromagnetischen Kerns (16) im Wesentlichen parallel zu dem wenigstens einen Fluidkanal (18) in dem ferromagnetischen Kern (16) ist; und wobei
• die Polymermatrixzusammensetzung eine Wärmeleitfähigkeit von mindestens 0,1 W/mK aufweist.

2. Statorspulenanordnung (14) nach Anspruch 1, wobei die Polymermatrixzusammensetzung eine Wärmeleitfähigkeit in einem Bereich von speziell mindestens 0,2 W/mK aufweist.

3. Statorspulenanordnung (14) nach einem der vorhergehenden Ansprüche, wobei die Polymermatrixzusammensetzung eine dielektrische Stärke von mindestens 5 kV/mm aufweist.

4. Statorspulenanordnung (14) nach einem der vorhergehenden Ansprüche, wobei die Polymermatrixzusammensetzung eine dielektrische Stärke von mindestens 10 kV/mm aufweist.

5. Statorspulenanordnung (14) nach einem beliebigen der vorhergehenden Ansprüche, wobei der Kern (16) ferner einen Stapel von gegenseitig isolierten ferromagnetischen Blechen (19,19') mit einer magnetischen Permeabilität aufweist, die höher ist als die magnetische Permeabilität der Verbindung.

6. Statorspulenanordnung (14) nach Anspruch 5, wobei der Stapel von gegenseitig isolierten ferromagnetischen Blechen (19, 19') in dem mindestens einen Fluidkanal (18, 18') angeordnet ist und den Fluidkanal (18, 18') teilweise füllt.

7. Statorspulenanordnung (14) nach Anspruch 5, wobei der Stapel von gegenseitig isolierten ferromagnetischen Blechen (19,19') teilweise überlappende ferromagnetische Bleche (19,19') aufweist, um einen Fluidstrom entlang der Bleche (19, 19') zu ermöglichen.

8. Statorspulenanordnung (14) nach Anspruch 6, wobei der Stapel von gegenseitig isolierten ferromagnetischen Blechen (19,19') dazwischen eingefügte ferromagnetische Bleche (19,19') aufweist, um einen Fluidstrom entlang der Bleche (19, 19') zu ermöglichen.

9. Statorspulenanordnung (14) nach einem beliebigen der vorhergehenden Ansprüche, ferner mit einem Polschuh (26) an einem Kopf des ferromagnetischen Kerns (16), um einem Permanentmagneten an einem Rotor der elektrischen rotierenden Maschine zugewandt zu sein, wobei sich der Polschuh (26) seitlich von dem Kopf des ferromagnetischen Kerns (16) erstreckt, wobei der Polschuh (26) aus der Verbindung des ferromagnetischen Kerns (16) hergestellt ist.

10. Stator (2) für eine Permanentmagneten verwendende elektrische rotierende Maschine, aufweisend:
- ein Statorgehäuse um eine Mittelachse, die eine Öffnung zum Aufnehmen einer drehenden Welle aufweist, die sich mit der Mittelachse (A) deckt;
- mehrere Statorspulenanordnungen (14) nach einem beliebigen der Ansprüche 1 - 9, die an dem Statorgehäuse angebracht sind, wobei die mehreren Statorspulenanordnungen (14) mit einem Abstand um die Mittelachse (A) angeordnet sind.

11. Stator (2) nach Anspruch 10, wobei die Statorspulenanordnungen (14) an einem peripheren Abschnitt des Statorgehäuses angebracht sind, wobei das Statorgehäuse für jede Statorspulenanordnung (14) eine Öffnung aufweist, die einer Öffnung des Fluidkanal (18, 18') des ferromagnetischen Kerns (16) der Statorspulenanordnung (14) entspricht.

12. Stator (2) nach Anspruch 11, wobei die Statorspulenanordnungen (14) an einem Umfang des Statorgehäuses angebracht sind.

13. Stator (2) nach einem beliebigen der Ansprüche 10 - 12, wobei die magnetische Achse (B) durch die Statorspulenanordnungen (14) hindurch axial ausgerichtet ist.

14. Stator nach einem beliebigen der Ansprüche 10 - 12, wobei die magnetische Achse (B) durch die Statorspulenanordnungen (14) hindurch radial ausgerichtet ist.

15. Permanentmagneten verwendende elektrische rotierende Maschine, aufweisend:
- eine drehende Welle; und
- einen Stator gemäß einem beliebigen der Ansprüche 10 - 14, der um die drehende Welle angebracht ist;
- einen Rotor, der mit der drehenden Welle verbunden ist,
• wobei der Rotor mit Permanentmagneten versehen ist, wobei die Permanentmagneten den ferromagnetischen Kernen (16) der Statorspulenanordnungen (14) des Stators (2) zugewandt sind;
• wobei der Rotor Belüftungsmittel aufweist, die dazu dienen, im Betrieb einen Fluidstrom durch die Fluidkanäle (18, 18') der ferromagnetischen Kerne (16) hindurch zu erzeugen.

## Revendications

1. Agencement de bobine de stator (14) pour une machine tournante électrique à aimant permanent, comprenant :
• un noyau ferromagnétique (16) :
• au moins un enroulement (15) d'un conducteur enroulé autour dudit noyau ferromagnétique (16), dans lequel ledit au moins un enroulement (15) est centré le long d'un axe magnétique (B) à travers ledit noyau ferromagnétique (16) ;
• dans lequel ledit noyau ferromagnétique (16) comprend un composé comprenant une composition de matrice polymère et une charge fonctionnelle, la charge fonctionnelle comprenant un matériau ferromagnétique, **caractérisé par**
• ledit noyau ferromagnétique (16) comprenant au moins un canal de fluide (18) s'étendant à travers ledit noyau (16) pour éliminer l'excédent de chaleur du noyau (16) ; dans lequel
• ledit axe magnétique (B) dudit noyau ferromagnétique (16) étant substantiellement parallèle à au moins un canal de fluide (18) dans ledit noyau ferromagnétique (16) ; et dans lequel
• ladite composition de matrice polymère a une conductivité thermique d'au moins 0.1 W/mK.

2. Agencement de bobine de stator (14) selon la revendication 1, dans lequel ladite composition de matrice polymère a une conductivité thermique dans une plage de, en particulier d'au moins 0.2 W/mK.

3. Agencement de bobine de stator (14) selon une quelconque des revendications précédentes, dans lequel ladite composition de matrice polymère a une rigidité diélectrique d'au moins 5 kV/mm.

4. Agencement de bobine de stator (14) selon une quelconque des revendications précédentes, dans lequel ladite composition de matrice polymère a une rigidité diélectrique d'au moins 10 kV/mm.

5. Agencement de bobine de stator (14) selon une quelconque des revendications précédentes, le noyau (16) comprenant en outre une pile de laminages ferromagnétiques isolés réciproquement (19, 19') ayant une perméabilité magnétique supérieure à la perméabilité magnétique du composé.

6. Agencement de bobine de stator (14) selon la revendication 5, dans lequel ladite pile de laminages ferromagnétiques isolés réciproquement (19,19') est disposée dans au moins un canal de fluide (18, 18') en remplissant partiellement ledit canal de fluide (18,18').

7. Agencement de bobine de stator (14) selon la revendication 5, dans lequel ladite pile de laminages ferromagnétiques isolés réciproquement (19, 19') a des laminages ferromagnétiques se superposant partiellement (19, 19') pour permettre un écoulement de fluide au-delà desdits laminages (19, 19').

8. Agencement de bobine de stator (14) selon la revendication 6, dans lequel ladite pile de laminages ferromagnétiques isolés réciproquement (19, 19') a des laminages ferromagnétiques espacés (19,19') pour permettre un écoulement de fluide au-delà desdits laminages (19,19').

9. Agencement de bobine de stator (14) selon une quelconque des revendications précédentes, comprenant en outre un épanouissement polaire (26) au niveau d'une tête du noyau ferromagnétique (16) pour faire face à un aimant permanent sur un rotor de la machine tournante électrique, l'épanouissement polaire (26) s'étendant latéralement à partir de la tête du noyau ferromagnétique (16), dans lequel l'épanouissement polaire (26) est fabriqué dans le composé du noyau ferromagnétique (16).

10. Stator (2) pour une machine tournant électrique à aimant permanent, comprenant :
- un châssis de stator autour d'un axe central, et ayant une ouverture pour recevoir un arbre rotatif coïncidant avec ledit axe central (A) ;
- une pluralité d'agencements de bobine de stator (14) selon une quelconque des revendications 1-13, fixée audit châssis de stator, ladite pluralité d'agencements de bobine de stator (14) étant espacée autour dudit axe central (A).

11. Stator (2) selon la revendication 14, dans lequel lesdits agencements de bobines de stator (14) sont montés sur une section périphérique dudit châssis de stator, ledit châssis de stator ayant pour chaque agencement de bobine de stator (14) une ouverture correspondant à une ouverture dudit canal de fluide (18, 18') dudit noyau ferromagnétique (16) dudit agencement de bobine de stator (14).

12. Stator (2) selon la revendication 11, dans lequel lesdits agencements de bobine de stator (14) sont fixés à une circonférence du châssis de stator.

13. Stator (2) selon une quelconque des revendications 10-12, dans lequel l'axe magnétique (B) à travers les agencements de bobines de stator (14) est orienté axialement.

14. Stator (2) selon une quelconque des revendications 10-12, dans lequel l'axe magnétique (B) à travers les agencements de bobines de stator (14) est orienté radialement.

15. Machine tournant électrique à aimant permanent comprenant :
- un arbre rotatif ; et
- un stator conformément à une quelconque des revendications 10-14, monté autour dudit arbre rotatif ;
- un rotor raccordé audit arbre rotatif,
• le rotor étant pourvu d'aimants permanents, les aimants permanents faisant face au noyau ferromagnétique (16) desdits agencements de bobine de stator (14) dudit stator (2) ;
• ledit rotor comprenant un moyen de ventilation pour générer en fonctionnement un écoulement de fluide à travers lesdits canaux de fluide (18, 18') desdits noyaux ferromagnétiques (16).
